# EUROPEAN PATENT APPLICATION

(11) **EP 4 681 795 A1**
(43) Date of publication of application: **21.01.2026**
(21) Application number: 23927604.1
(22) Date of filing: 01.12.2023
(51) Int. Cl.: B01D 45/08, F25B 43/02

(54) **OIL SEPARATOR**

(30) Priority: 15.03.2023 JP 2023040476
(71) Applicant: MAYEKAWA MFG. CO., LTD., Tokyo 135-8482 (JP)
(72) Inventor: TOMIYAMA, Yasushi, Tokyo 135-8482 (JP); YASUTOME, Akira, Tokyo 135-8482 (JP)
(74) Representative: Forresters IP LLP
(86) International application number: PCT/JP2023/043057
(87) International publication number: WO 2024/189999

(57) **Abstract**

[Problem] To provide an oil separator that can suppress oil surface fluctuation, and that can prevent a situation in which oil flows downstream instead of being separated.

[Solution] An oil separator 1 is a vertical oil separator that separates gas and oil from a gas-liquid mixture formed of the gas and the oil, the oil separator 1 including a body part 10 having a cylindrical shape, a pipe 20 being connected to the body part, the gas-liquid mixture flowing into the body part through the pipe 20, and a pair of ring plates 60, 70 being disposed at an upper position and a lower position in the body part with the pipe interposed between the pair of ring plates 60, 70.

## Description

### TECHNICAL FIELD

The present invention relates to a vertical oil separator that separates gas and oil contained in a gas-liquid mixture.

### BACKGROUND ART

A screw compressor (hereinafter also referred to as a "compressor") is used with refrigerating machine oil (hereinafter also referred to as "oil") for the purpose of cooling, lubrication or the like being injected into a gas suctioned into the compressor. Due to this, the oil is intermixed (gas-liquid mixture) with the gas discharged from the compressor.

Therefore, it is necessary to introduce the gas-liquid mixture discharged from the compressor to an oil separator once so as to separate the gas and oil from each other in the oil separator. Then, the oil is recycled by a differential pressure oil supply method or an oil pump to be supplied to the compressor.

For such an oil separator, the following Patent Literature 1, for example, discloses an oil separator that separates gas and oil by centrifugation by blowing a gas-liquid mixture into a body part having a cylindrical shape.

### Citation List

### Patent Literature

Patent Literature 1: JP 2004-52710 A

### SUMMARY OF INVENTION

### Technical Problem

A large amount of oil is contained in a discharge pipe that connects a compressor and an oil separator to each other. At the same time, it is necessary to reserve a certain amount of oil on the bottom surface of the oil separator. Therefore, the oil accumulated in the compressor and the discharge pipe during the stop state of the compressor enters the oil separator all at once at the next startup, thus significantly fluctuating the oil surface of the oil reserved on the bottom surface of the oil separator. Fluctuation of the oil surface may generate air bubbles in the oil in the oil separator, thus causing cavitation in the oil pump, so that there is a possibility that a sufficient amount of oil is not supplied to the compressor. In addition, when oil containing air bubbles is supplied to the compressor, a shortage of an oil film on shaft seals occurs, or a malfunction occurs in a lubricating system of a bearing or a sliding surface.

Furthermore, when the oil accumulated in the compressor and the discharge pipe during the stop state of the compressor enters the oil separator all at once at the next startup, there is also a possibility that oil flows downstream instead of being separated.

The present invention has been made to solve the above-mentioned problems, and it is an object of the present invention to provide an oil separator that can suppress oil surface fluctuation at startup, and that can prevent a situation in which oil flows downstream instead of being separated.

### Means for Solving Problem

An oil separator according to the present invention that achieves the above-mentioned object is a vertical oil separator that separates gas and oil contained in a gas-liquid mixture, the oil separator including: a body part having a cylindrical shape; a pipe connected to the body part, the gas-liquid mixture flowing into the body part through the pipe; and a pair of ring plates disposed at an upper position and a lower position in the body part with the pipe interposed between the pair of ring plates.

### Advantageous Effects of the Invention

According to the oil separator described above, the lower ring plate of the pair of ring plates acts as a baffle plate at startup and hence, it is possible to suitably suppress a situation in which a gas-liquid mixture flowing into the body part from the pipe fluctuates the oil surface of oil reserved in the lower part of the body part. Meanwhile, the upper ring plate of the pair of ring plates acts as a baffle plate and hence, it is possible to prevent a situation in which oil of the gas-liquid mixture flowing into the body part from the pipe is discharged from an exhaust flow passage and flows downstream instead of being separated from gas. Accordingly, it is possible to provide an oil separator that can suppress oil surface fluctuation at startup, and that can prevent a situation in which oil flows downstream instead of being separated.

### BRIEF DESCRIPTION OF DRAWINGS

Fig. 1 is a schematic perspective view showing an oil separator according to an embodiment of the present invention.
Fig. 2 is a schematic plan view showing the oil separator according to the present embodiment.
Fig. 3 is a schematic front view showing the oil separator according to the present embodiment.
Fig. 4 shows a simulation result for a case of using an oil separator according to a comparison example.
Fig. 5 shows a simulation result for a case of using the oil separator according to the embodiment.
Fig. 6 is a schematic perspective view showing an oil separator according to a modification 1.
Fig. 7 is a schematic plan view showing the oil separator according to the modification 1.
Fig. 8 is a schematic plan view showing an example 1 of an offset in an oil separator according to a modification.
Fig. 9 is a schematic plan view showing an example 2 of an offset in an oil separator according to a modification.
Fig. 10 is a schematic plan view showing an example 3 of an offset in an oil separator according to a modification.

### DESCRIPTION OF EMBODIMENT

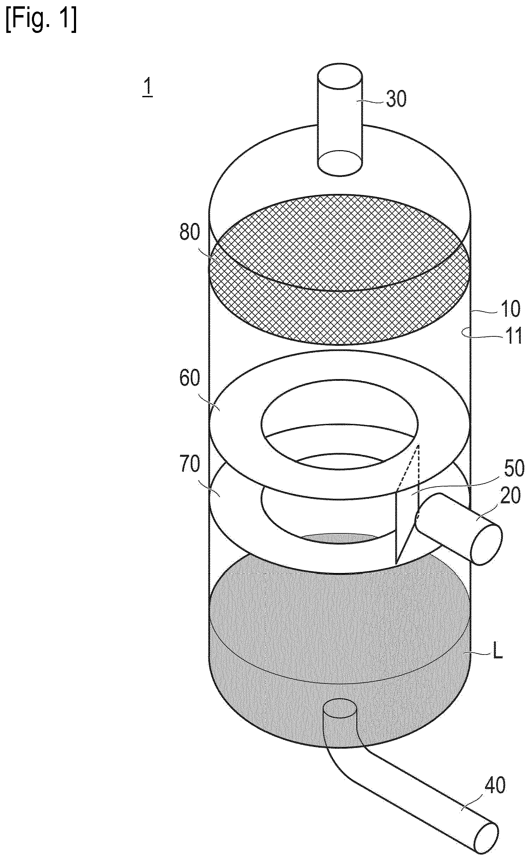

An embodiment of the present invention will be described with reference to Fig. 1 to Fig. 3. In the description of the drawings, identical elements are given the same reference symbols, and the repeated description will be omitted. The dimensional ratios in the drawings are exaggerated for convenience of description, and may be different from the actual ratios.

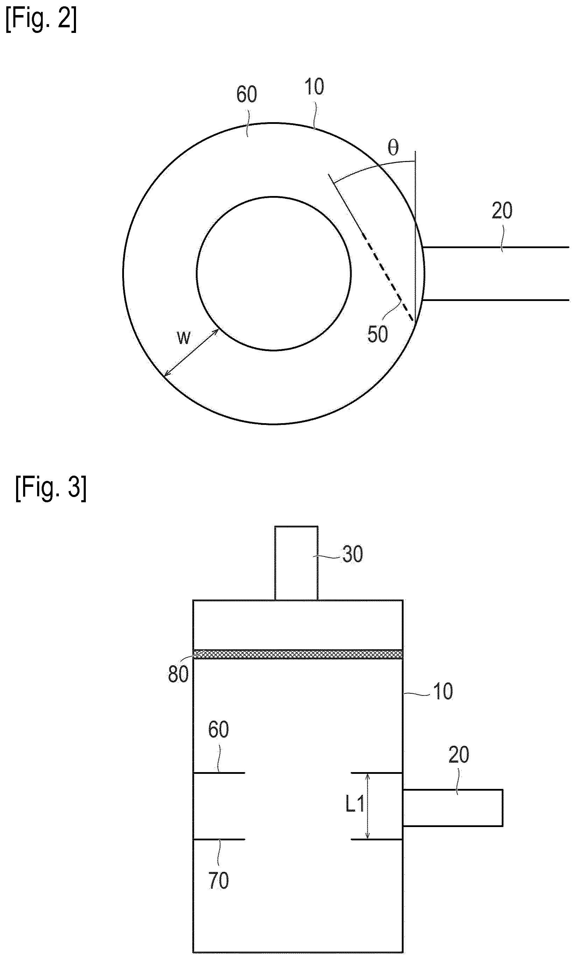

Fig. 1 is a schematic perspective view showing an oil separator 1 according to the embodiment of the present invention. Fig. 2 is a schematic plan view showing the oil separator 1 according to the present embodiment. Fig. 3 is a schematic front view showing the oil separator 1 according to the present embodiment.

The oil separator 1 separates gas and oil contained in a gas-liquid mixture. The oil separator 1 is a vertical oil separator disposed along a vertical direction.

As shown in Fig. 1 to Fig. 3, the oil separator 1 includes a body part 10, a pipe 20, an exhaust flow passage 30, an oil discharge flow passage 40, a guide part 50, a first ring plate 60, a second ring plate 70, and a demister 80, the body part 10 having a cylindrical shape, the pipe 20 being connected to the body part 10, the gas-liquid mixture flowing into the body part through the pipe 20, gas being exhausted through the exhaust flow passage 30, refrigerating machine oil being discharged through the oil discharge flow passage 40, the guide part 50 guiding, toward an inner wall 11 of the body part 10, the gas-liquid mixture flowing into the body part 10 from the pipe 20, the first ring plate 60 being disposed at a position higher than the pipe 20, the second ring plate 70 being disposed at a position lower than the pipe 20, the demister 80 being disposed immediately upstream of the exhaust flow passage 30 to separate oil droplets from the gas for coagulation and sedimentation.

The body part 10 is formed into a cylindrical shape extending in an up-down direction. Although not particularly limited, the body part 10 is formed by casting, or made of a steel material, for example. Although not particularly limited, it is preferable to set the size of the body part 10 to a size that allows gas and liquid to be suitably separated from each other. Although not particularly limited, the inner diameter of the body part 10 may be set to between 400 and 2000 mm, for example.

A certain amount of oil L is reserved in advance in the lower part of the body part 10.

As shown in Fig. 1, the pipe 20 is connected to the body part 10. The pipe 20 forms a passage when the gas-liquid mixture flows from a screw compressor toward the body part 10 of the oil separator 1. In a plan view shown in Fig. 2, the pipe 20 is provided at a center position of the body part 10 in the up-down direction in Fig. 2. In the plan view shown in Fig. 2, the pipe 20 may be provided so as to be offset by a predetermined distance in an upward direction or a downward direction in Fig. 2 with respect to the center of the body part 10.

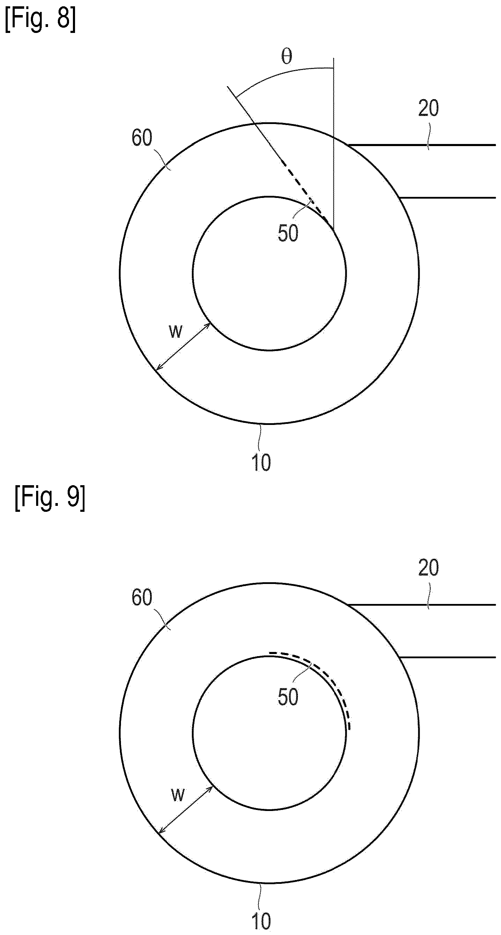

In a case where the pipe 20 is offset in the upward direction, it is preferable to change the position of the guide part 50 as shown in Fig. 8. In this case, the guide part 50 is fixed to two portions, that is, to the lower surface of the first ring plate 60 and the upper surface of the second ring plate 70. The reason for this is, when the pipe 20 is offset, to prevent the flow passage from being excessively narrowed due to fixing of the guide part 50 to the inner wall 11 of the body part 10. In this case, an angle θ is set to 45 degrees, for example, to prevent the guide part 50 from obstructing the flow of a fluid flowing into the body part 10 from the pipe 20.

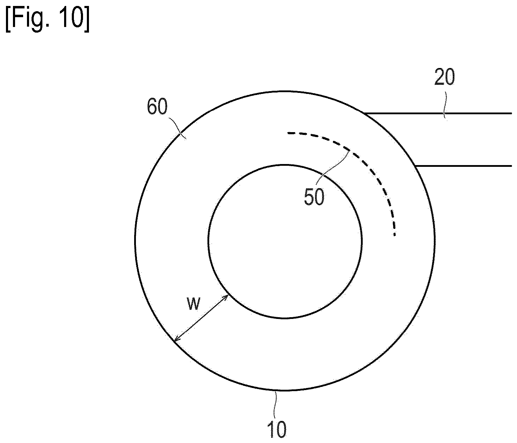

In the case where the pipe 20 is offset in the upward direction, the guide part 50 may have an arc shape as shown in Fig. 9 and Fig. 10. Fig. 9 shows a case where the guide part 50 is joined to the inner circular edge of the first ring plate 60 and to the inner circular edge of the second ring plate 70 over a range of 90 degrees, and Fig. 10 shows a case where the guide part 50 is joined to the inner portions of the rings over a range of 90 degrees at a position between the first ring plate 60 and the second ring plate 70.

As shown in Fig. 1, the exhaust flow passage 30 is provided at the upper part of the body part 10. Only gas is exhausted through the exhaust flow passage 30.

As shown in Fig. 1, the oil discharge flow passage 40 is disposed at the lower part of the body part 10. Only oil is discharged through the oil discharge flow passage 40.

As shown in Fig. 1 and Fig. 2, the guide part 50 is a plate-like member. The guide part 50 is fixed to three portions, that is, to the inner wall 11 of the body part 10, the lower surface of the first ring plate 60, and the upper surface of the second ring plate 70. Although a method for fixing the guide part 50 is not particularly limited, the guide part 50 is fixed by welding, for example.

In the plan view shown in Fig. 2, the guide part 50 is disposed in such a way as to incline with respect to the up-down direction in Fig. 2. Although not particularly limited, in the plan view shown in Fig. 2, an inclination angle Θ of the guide part 50 shown by a broken line with respect to the up-down direction in Fig. 2 is set to between 10 and 60 degrees, and is set to 30 degrees, for example.

As shown in Fig. 1 and Fig. 3, the first ring plate 60 is provided at a position higher than the pipe 20. The first ring plate 60 has an inner diameter smaller than the inner diameter of the body part 10. The first ring plate 60 has a so-called toroidal shape. Although not particularly limited, a width W (see Fig. 2) of the first ring plate 60 is set to between 1 and 1.8 times the inner diameter of the pipe 20.

The first ring plate 60 is formed as a separate body from the body part 10, and is fixed to the body part 10 by welding, for example.

As shown in Fig. 1, the first ring plate 60 is disposed horizontally.

As described above, the first ring plate 60 is disposed at a position higher than the pipe 20, thus acting as a baffle plate and hence, it is possible to prevent a situation in which oil of the gas-liquid mixture flowing into the body part 10 from the pipe 20 is discharged from the exhaust flow passage 30 and flows downstream instead of being separated from gas.

As shown in Fig. 1 and Fig. 3, the second ring plate 70 is provided at a position lower than the pipe 20. Therefore, the first ring plate 60 and the second ring plate 70 are disposed at an upper position and a lower position in the body part 10 with the pipe 20 interposed therebetween. Although not particularly limited, a distance L1 (see Fig. 3) by which the first ring plate 60 and the second ring plate 70 separate from each other along the vertical direction is set to between 1.5 and 4 times the inner diameter of the pipe 20.

The second ring plate 70 has an inner diameter smaller than the inner diameter of the body part 10. The second ring plate 70 has a so-called toroidal shape. Although not particularly limited, a width W (see Fig. 2) of the second ring plate 70 is set to between 1 and 1.8 times the inner diameter of the pipe 20. That is, the second ring plate 70 has substantially the same configuration as the first ring plate 60.

The second ring plate 70 is formed as a separate body from the body part 10, and is fixed to the body part 10 by welding, for example.

As shown in Fig. 1, the second ring plate 70 is disposed horizontally.

As described above, the second ring plate 70 is disposed at a position lower than the pipe 20, thus acting as a baffle plate and hence, it is possible to suitably suppress a situation in which a gas-liquid mixture flowing into the body part 10 from the pipe 20 fluctuates the oil surface of the oil L reserved in the lower part of the body part 10.

As has been described above, the oil separator 1 according to the present embodiment is the vertical oil separator 1 that separates gas and oil contained in a gas-liquid mixture, formed of the gas and the oil. The oil separator 1 includes the body part 10, the pipe 20, and a pair of the first ring plate 60 and the second ring plate 70, the body part 10 having a cylindrical shape, the pipe 20 being connected to the body part 10, the gas-liquid mixture flowing into the body part through the pipe 20, the pair of the first ring plate 60 and the second ring plate 70 being disposed at an upper position and a lower position in the body part 10 with the pipe 20 interposed therebetween. According to the oil separator 1 having such a configuration, the second ring plate 70 acts, at startup, as a baffle plate that guards an oil surface and hence, it is possible to suitably suppress a situation in which a gas-liquid mixture flowing into the body part 10 from the pipe 20 fluctuates the oil surface of the oil L reserved in the lower part of the body part 10. Meanwhile, the first ring plate 60 acts as a baffle plate that regulates the flow of gas and hence, it is possible to prevent a situation in which oil of the gas-liquid mixture flowing into the body part 10 from the pipe 20 is discharged from the exhaust flow passage 30 and flows downstream instead of being separated from gas. Accordingly, it is possible to provide the oil separator 1 that can suppress oil surface fluctuation at startup, and that can prevent a situation in which oil flows downstream instead of being separated.

The oil separator 1 also includes the guide part 50 that guides, toward the inner wall 11 of the body part 10, the gas-liquid mixture flowing into the body part 10 from the pipe 20. According to the oil separator 1 having such a configuration, the guide part 50 guides the gas-liquid mixture toward the inner wall 11 of the body part 10, so that the second ring plate 70 more suitably acts as a baffle plate at startup and hence, it is possible to more suitably suppress a situation in which a gas-liquid mixture flowing into the body part 10 from the pipe 20 fluctuates the oil surface of the oil L reserved in the lower part of the body part 10. Meanwhile, the first ring plate 60 more suitably acts as a baffle plate and hence, it is possible to more suitably prevent a situation in which oil of the gas-liquid mixture flowing into the body part 10 from the pipe 20 is discharged from the exhaust flow passage 30 and flows downstream instead of being separated from gas.

The guide part 50 is a plate-like member fixed to the body part 10. According to the oil separator 1 having such a configuration, it is possible to guide a gas-liquid mixture toward the inner wall 11 of the body part 10 with a simple configuration.

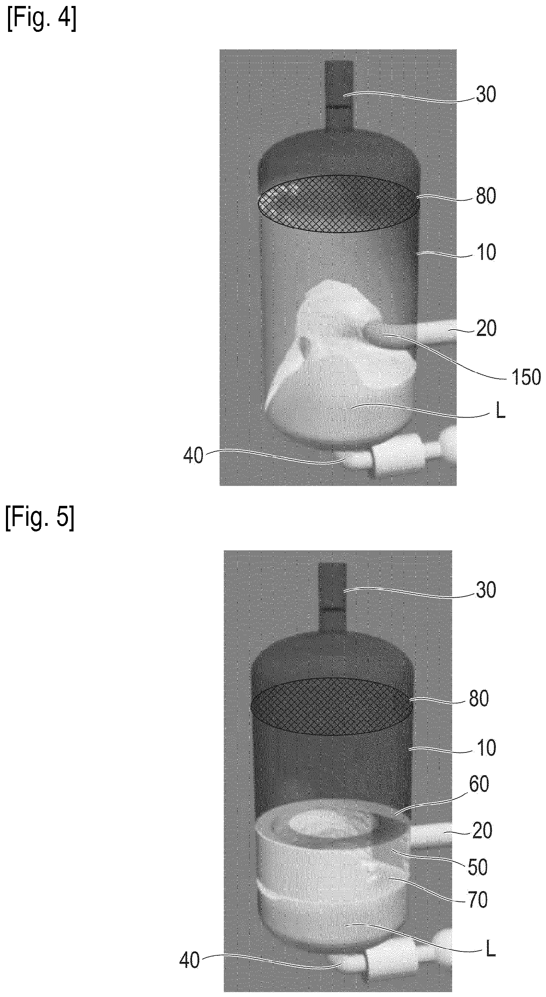

Next, the description will be made, with reference to Fig. 4 and Fig. 5, for simulation results of behavior of oil at the time of the gas-liquid mixture flowing into the body part in a case where an oil separator according to a comparison example is used and in the case where the oil separator 1 according to the embodiment is used.

As shown in Fig. 4, in the oil separator according to the comparison example, the first ring plate 60 and the second ring plate 70 are not provided. Further, as shown in Fig. 4, a guide part 150 according to a modification described later is formed in the oil separator according to the comparison example.

In the simulation result of the oil separator according to the comparison example, as shown in Fig. 4, when oil accumulated in a screw compressor and a discharge pipe during the stop state of the compressor enters the oil separator all at once at the next startup, the oil surface of the oil L reserved on the bottom surface of the oil separator fluctuates. Fluctuation of the oil surface may generate air bubbles in the oil, so that cavitation may occur in an oil pump, or a malfunction may occur in a lubricating system.

In addition, oil scattering upward reaches the demister 80, so that a large amount of oil passes through the demister 80 and flows out from the exhaust flow passage 30.

In contrast, in the simulation result of the oil separator 1 according to the embodiment, as shown in Fig. 5, the second ring plate 70 acts as a baffle plate and hence, it is possible to suitably suppress a situation in which a gas-liquid mixture flowing into the body part 10 from the pipe 20 fluctuates the oil surface of the oil L reserved in the lower part of the body part 10.

In addition, oil does not scatter upward and hence, a large amount of oil does not reach the demister 80.

### <Modification 1>

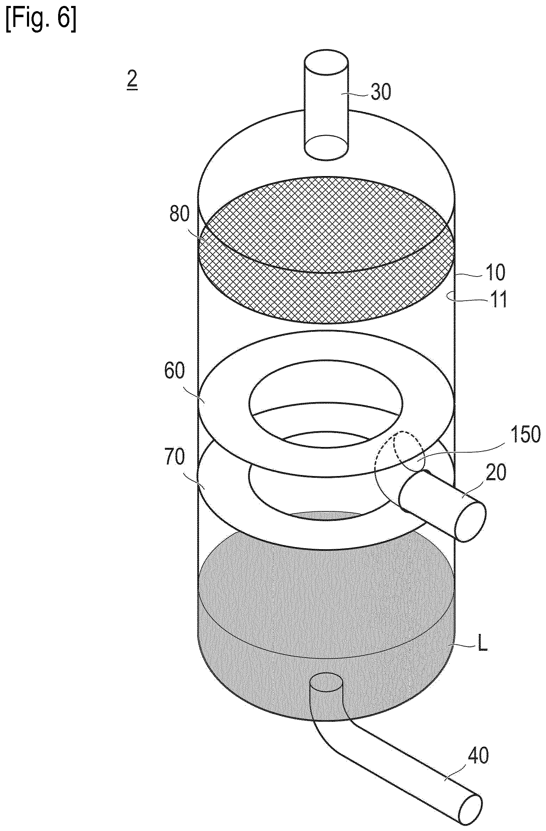

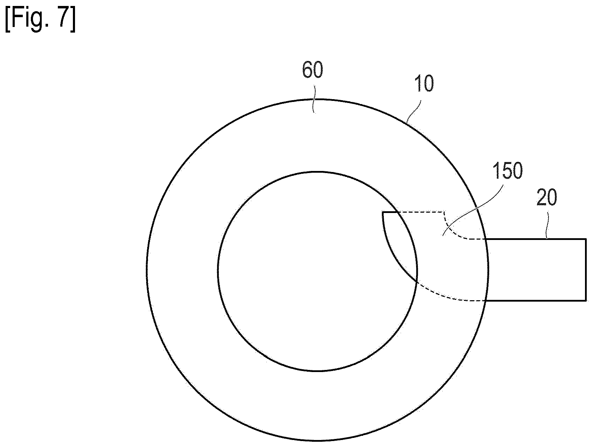

Next, a configuration of an oil separator 2 according to a modification 1 will be described with reference to Fig. 6 and Fig. 7. Fig. 6 is a schematic perspective view showing the oil separator 2 according to the modification 1. Fig. 7 is a schematic plan view showing the oil separator 2 according to the modification 1.

The description of components common to the corresponding components in the embodiment will be omitted, and features only contained in the modification 1 will be described. The description will be made by giving the same reference symbols to components identical to the corresponding components in the embodiment described above, and the repeated description will be omitted. The oil separator 2 according to the modification 1 differs from the oil separator 1 according to the embodiment in a configuration of the guide part 150.

As shown in Fig. 6 and Fig. 7, the oil separator 2 according to the modification 1 includes a body part 10, a pipe 20, an exhaust flow passage 30, an oil discharge flow passage 40, the guide part 150, a first ring plate 60, and a second ring plate 70, the body part 10 having a cylindrical shape, the pipe 20 being connected to the body part 10, a gas-liquid mixture flowing into the body part through the pipe 20, gas being exhausted through the exhaust flow passage 30, refrigerating machine oil being discharged through the oil discharge flow passage 40, the guide part 150 guiding, toward an inner wall 11 of the body part 10, the gas-liquid mixture flowing into the body part 10 from the pipe 20, the first ring plate 60 being disposed at a position higher than the pipe 20, the second ring plate 70 being disposed at a position lower than the pipe 20. The body part 10, the pipe 20, the exhaust flow passage 30, the oil discharge flow passage 40, the first ring plate 60, and the second ring plate 70 are components identical to the corresponding components of the oil separator 1 according to the embodiment described above and hence, the description of such components will be omitted.

The guide part 150 guides, toward the inner wall 11 of the body part 10, the gas-liquid mixture flowing into the body part 10 from the pipe 20. The guide part 150 is an inner pipe integrally formed with the pipe 20.

In a plan view shown in Fig. 7, the guide part 150 is configured to bend upward from the left side in Fig. 7 to cause a gas-liquid mixture to flow into the body part 10 toward the upward direction in Fig. 7. A bending direction of the guide part 150 is not particularly limited provided that the guide part 150 guides, toward the inner wall 11 of the body part 10, a gas-liquid mixture flowing into the body part 10 from the pipe 20.

As shown in Fig. 6 and Fig. 7, the pipe 20 and the guide part 150 are disposed in such a way as to penetrate through the body part 10.

As has been described above, in the oil separator 2 according to the modification 1, the guide part 150 is an inner pipe integrally formed with the pipe 20. According to the oil separator 2 having such a configuration, unlike the guide part 50 of the oil separator 1 according to the embodiment, the guide part 150 is integrally formed with the pipe 20 and hence, it is possible to prevent unintentional detachment of the guide part 150 from the body part 10.

The present invention is not limited to the embodiment and the modification described above, and various modifications are conceivable without departing from Claims.

Further, in the embodiment described above, the first ring plate 60 and the second ring plate 70 have substantially the same configuration. However, the first ring plate and the second ring plate may have different configurations.

The present application is based on Japanese patent application No. 2023-40476 filed on March 15, 2023, and the disclosed contents thereof are incorporated herein by reference in its entirety.

### Reference Signs List

1, 2: oil separator,
10: body part,
11: inner wall,
20: pipe,
50, 150: guide part,
60: first ring plate,
70: second ring plate.

## Claims

1. An oil separator being a vertical oil separator that separates gas and oil contained in a gas-liquid mixture, the oil separator comprising:
a body part having a cylindrical shape;
a pipe connected to the body part, the gas-liquid mixture flowing into the body part through the pipe; and
a pair of ring plates disposed at an upper position and a lower position in the body part with the pipe interposed between the pair of ring plates.

2. The oil separator according to claim 1, further comprising a guide part configured to guide, toward an inner wall of the body part, the gas-liquid mixture flowing into the body part from the pipe.

3. The oil separator according to claim 2, wherein the guide part is a plate-like member fixed to the body part.

4. The oil separator according to claim 2, wherein the guide part is an inner pipe integrally formed with the pipe, and having a curved shape.

5. The oil separator according to claim 1 or claim 2, wherein the pipe is provided so as to be offset from a center of the body part by a predetermined distance.

6. The oil separator according to claim 5, wherein the guide part is formed into a linear shape, and is fixed to the pair of ring plates.

7. The oil separator according to claim 5, wherein the guide part is formed into an arc shape, and is fixed to the pair of ring plates.
